# EUROPÄISCHE PATENTANMELDUNG

(11) **EP 2 325 001 A1**
(43) Veröffentlichungstag der Anmeldung: **25.05.2011**
(21) Anmeldenummer: 09175666.8
(22) Anmeldetag: 11.11.2009
(51) Int. Cl.: B32B 17/10

(54) **Verbundverglasungen mit weichmacherhaltigen Folien geringer Kriechneigung**

(71) Anmelder: Kuraray Europe GmbH, 65926 Frankfurt am Main (DE)
(72) Erfinder: Steuer, Martin, Dr., 65835 Liederbach (DE); Keller, Uwe, Dr., 53177 Bonn (DE)
(74) Vertreter: Kisters, Michael Marcus

(57) **Zusammenfassung**

Die Erfindung betrifft die Verwendung von weichmacherhaltigen, auf Polyvinylacetal basierenden Folien mit einem Polyvinylalkoholanteil im Polyvinylacetal von weniger als 18 Gew.-% mit geringer Kriechneigung zur Herstellung von Verbundglaslaminaten.

## Beschreibung

### Technisches Gebiet

Die Erfindung betrifft die Herstellung von Verbundverglasungen unter Verwendung von weichmacherhaltigen Folien auf Basis von Polyvinylacetal mit geringer Kriechneigung.

### Stand der Technik

Verbundsicherheitsgläser bestehen im Allgemeinen aus zwei Glasscheiben und einer die Glasscheiben verbindenden Zwischenfolie. Als Folienmaterial wird überwiegend weichmacherhaltiger teilacetalisierter Polyvinylalkohol (Polyvinylacetal), insbesondere Polyvinylbutyral (PVB) verwendet. Verbundsicherheitsgläser (VSG) werden beispielsweise als Windschutzscheiben oder Seitenverglasungen im Kraftfahrzeugbereich sowie als Sicherheitsverglasung im Baubereich eingesetzt.

Als bevorzugte Weichmacher für solche PVB-Folien haben sich aliphatische Diester des Tri- bzw. Tetraethylenglykols etabliert. Besonders häufig werden als Weichmacher 3G7, 3G8 oder 4G7 eingesetzt, worin die erste Ziffer die Anzahl der Ethlenglycoleinheiten und die letzte Ziffer die Anzahl der Kohlenstoffatome im Carbonsäureteil der Verbindung bezeichnet. So steht 3G8 für Triethylenglykol-bis-(2-ethylhexanoat), d.h. für eine Verbindung der Formel C4H9CH (CH2CH3) CO (OCH2CH2) 3O2CCH (CH2CH3) C4H9.

Als Weichmacher für teilacetalisierte Polyvinylalkohole werden bevorzugt Verbindungen eingesetzt, die in einer VSG-Zwischenschichtfolie für hohe Transparenz, niedrige Feuchtigkeitsaufnahme, gute Haftung zum Glas und eine ausreichende Kälteflexibilität der Folie sorgen. Weiterhin müssen diese Verbindungen eine ausreichende Verträglichkeit mit dem teilacetalisierten Polyvinylalkohol aufweisen, d.h. in einer ausreichenden Menge ohne wieder auszuschwitzen mit diesem mischbar sein.

Allgemein sinkt die Verträglichkeit von Weichmacher und teilacetalisiertem Polyvinylalkohol mit der Abnahme des polaren Charakters des Weichmachers. So sind Weichmacher höherer Polarität mit Polyvinylacetal besser verträglich als solche mit niedrigerer Polarität. Alternativ steigt die Verträglichkeit von Weichmachern geringer Polarität mit Zunahme des Acetalisierungsgrades, d.h. mit Abnahme der Anzahl an Hydroxygruppen und damit der Polarität des Polyvinylacetals.

PVB-Folie wird industriell zum überwiegenden Teil mit 3G8 als Weichmacher hergestellt.

Die Feuchteaufnahme einer PVB-Folie und damit verbunden ihre Resistenz gegenüber Entstehung von Defekten im Langzeiteinsatz, wird im Wesentlichen durch den Acetalisierungsgrad bzw. den Polyvinylalkoholgehalt des in der Formulierung verwendeten PVB-Polymers bestimmt.

Zugleich verlangen die bei den üblichen, industriell in PVB-Folie genutzten Polyvinylacetalen vorherrschenden relativ hohen Polyvinylalkoholgehalte aus Verträglichkeitsgründen die Verwendung der genannten, vergleichsweise polaren Weichmachern, welche auch ein vergleichsweise geringes Molekulargewicht und damit eine vergleichsweise hohe Flüchtigkeit aufweisen.

Eine für langlebige Architekturverglasung optimale PVB-Folie sollte demnach besser auf einem hydrophoben PVB basieren, das einen niedrigen Polyvinylalkoholgehalt aufweist. Hydrophobe PVB's lassen sich mit weniger polaren Weichmachern kombinieren, d.h. sind mit diesen verträglich.

Gleichzeitig gelten bei Verwendung von PVB-Folie im Architekturbereich hohe Anforderungen an das mechanische Verhalten einer PVB-Folie. Dies betrifft nicht nur deren Reißfestigkeit betrifft, sondern auch den Widerstand gegenüber langsamen Abrutschen (Kriechen) von nur von der Folie gehaltenen zum Teil mehrere mm dicken und damit schweren Einzelgläsern. Insbesondere dann, wenn ein VSG nur rückseitig in eine Fassadenhaltekonstruktion eingeklebt ist und die vordere Glasscheibe nicht extra mechanisch abgestützt ist, kann dies zu Defekten führen.

Die Forderung nach einer PVB-Folie welche sowohl einen geringen Polyvinylalkoholgehalt (und damit eine verbesserte Langzeitstabilität) als auch eine geringe Kriechneigung (und damit geeignet zum Auflaminieren von dicken Einzelgläsern) aufweist lässt sich jedoch nicht auf triviale Weise erfüllen, da gerade Folien basierend auf höher acetalisiertem PVB bei erhöhter Temperatur zum Kriechen neigen. Da je nach Verwendungsregion sowohl für Architektur- als auch für Kfz-Anwendungen Dauertemperaturen von mehr als 60°C im VSG beobachtet werden können, verbietet sich normalerweise die Verwendung von PVB-Folie basierend auf PVB mit niedrigem Polyvinylalkoholgehalt.

### Aufgabe

Da für Verbundglaslaminate im Architekturbereich teilweise Qualitätsgarantien von mehr als 20 Jahren gegeben werden müssen, bestand Bedarf, Zwischenschichtfolien mit reduzierter Feuchteaufnahme und Weichmacherabgabe aber trotzdem ausreichend geringer Kriechneigung bei erhöhter Temperatur bereitzustellen. Es wurde überraschend gefunden, dass die Kriechneigung von PVB-Folie basierend auf PVB mit einem Polyvinylalkoholgehalt von weniger als 18 Gew.-% unter Temperaturbelastung bei vorgegebenem Acetalisierungsgrad in starkem Maße durch die bei der Synthese des Polyvinylacetals zugrunde gelegten Rohstoffe und Art der Reaktionsführung bestimmt wird, und nur in untergeordnetem Maße durch deren Weichmachergehalt.

Es wurde insbesondere gefunden, dass die Kriechneigung einer weichmacherhaltige Folie auf Basis von Polyvinylacetal unter Temperaturbelastung maßgeblich von dessen Polyvinylalkoholgehalt, Molekulargewicht, Vernetzungsgrad oder den Acetalisierungsbedingungen bei der Herstellung abhängt.

### Darstellung der Erfindung

Gegenstand der vorliegenden Erfindung sind daher Verbundglaslaminate, bestehend aus einem Schichtkörper aus mindestens zwei Glasscheiben mit mindestens einer zwischengelegten Folie aus weichmacherhaltigem Polyvinylacetal wobei die Folie Polyvinylacetal mit einem Polyvinylalkoholanteil von weniger als 18 Gew. - % enthält und eine Kriechneigung, bestimmt an einem Laminat mit dem Aufbau aus 3 mm Floatglas/ 0,76 mm Folie / 3 mm Floatglas, bei einer Temperatur von 100°C nach 7 Tagen von weniger als 5 mm aufweist.

Folien dieser Art sind daher besonders geeignet, um erfindungsgemäße Verbundglaslaminate, die mindestens eine Glasscheibe mit einer Dicke von mehr als 3 mm, bevorzugt mehr als 4, insbesondere mehr als 5 mm oder mehr als 8 mm aufweisen, herzustellen.

Bevorzugt kann die Kriechneigung der weichmacherhaltigen, auf Polyvinylacetal basierende Folie in der im folgenden genauer beschriebenen Messmethode weniger als 3 mm, vorzugsweise weniger als 2 mm und am meisten bevorzugt weniger als 1 mm sein.

Wie bereits beschrieben wirkt sich ein ausreichend niedriger Polyvinylalkoholgehalt nicht nur direkt auf die Feuchteaufnahme der Folie aus, sondern ist zugleich Vorraussetzung dafür, dass stark unpolare Weichmacher eine gute Verträglichkeit zum Polyvinylacetal aufweisen, so dass ein zusätzlicher Beitrag zur Feuchtereduktion durch Wahl eines solchen Weichmachers erhalten werden kann.

Aus diesem Grund werden für erfindungsgemäß eingesetzte Folien Polyvinylacetale mit Polyvinylalkoholgehalten kleiner 18,0 Gew.-% verwendet. Die erfindungsgemäß verwendeten Polyvinylacetale besitzen bevorzugt einen Polyvinylalkoholanteil von im Bereich 10 - 18 Gew.-%, besonders bevorzugt im Bereich 12 - 16 Gew.-% und insbesondere im Bereich als 13 - 15 Gew.-%. Ein Polyvinylalkoholanteil von 10 Gew.-% sollte wegen zu hoher Eigenklebrigkeit und nicht mehr ausreichenden mechanischen Eigenschaften der damit hergestellten Folien nicht unterschritten werden.

In einer ersten Variante der Erfindung werden zur Herstellung der Folien Polyvinylacetale eingesetzt, deren Gewichtsmittel des Molekulargewichts Mw größer 110000 g/mol, bevorzugt Mw größer als 120000 g/mol und/oder deren Lösungsviskosität größer 80 mPas, bevorzugt größer 90 mPas ist. Das Molekulargewicht Mw bzw. die Lösungsviskosität wird wie in den Beispielen angegeben mittels Gelpermeationschromatographie (GPC) bzw. an 5 %igen Lösung der Polyvinylacetale in Ethanol gemessen.

Um die Extrusionsfähigkeit der Polyvinylacetale nicht zu verschlechtern sollte deren Molekulargewicht Mw nicht größer als 500000 g/mol und/oder die Lösungsviskosität nicht größer als 300 mPas sein.

Das Molekulargewicht Mw bzw. die Lösungsviskosität stellen makroskopisch am eingesetzten Polyvinylacetal bestimmte Werte dar. Es können daher auch Mischungen aus mehreren Polyvinylacetalen verwendet werden, deren Molekulargewicht Mw bzw. Lösungsviskosität jeweils über und unter den angegebenen Grenzwerten liegen können. Das Abmischen mehrer Polyvinylacetale unter Erhalt eines Gemischs mit den genannten Untergrenzen für Molekulargewicht Mw bzw. Lösungsviskosität ist dem Fachmann bekannt.

Das erhöhte Molekulargewicht bzw. die erhöhte Lösungsviskosität kann durch Einsatz von entsprechenden Polyvinylalkoholen für die Herstellung der Polyvinylacetale erreicht werden. Bevorzugt weisen die zur Herstellung der Polyvinylacetale eingesetzten Polyvinylalkohole eine Lösungsviskosität von mehr als 35 mPas auf, gemessen als 4% wässrige Lösung. Die Polyvinylalkohole können im Rahmen der vorliegenden Erfindung rein oder als Mischung von Polyvinylalkoholen mit unterschiedlichem Polymerisationsgrad oder Hydrolysegrad eingesetzt werden. Falls Mischungen von Polyvinylalkoholen eingesetzt werden, liegt deren Lösungsviskosität erfindungsgemäß oberhalb von 35 mPas.

Folien enthaltend Polyvinylacetale mit den genannten Spezifikationen für Molekulargewicht Mw bzw. Lösungsviskosität sind darüber hinaus bei gleichem Polyvinylalkoholgehalt bezüglich weiterer gewünschter Eigenschaften, wie etwa eine hohe optische Transparenz gegenüber den auf Polyvinylacetal mit einem Molekulargewicht von Mw < 110000 g/mol bzw. einer Lösungsviskosität von < 80 mPas basierenden praktisch gleichwertig.

Die zur Herstellung der erfindungsgemäß verwendeten Folien erforderlichen Polyvinylacetale werden nach den bekannten Methoden durch Umsetzen von Polyvinylalkoholen mit einem entsprechenden Molgewicht und Restacetatgehalt mit einem oder mehreren Aldehyden erhalten.

Als Polyvinylalkohol können im Rahmen der vorliegenden Erfindung neben Copolymeren aus Vinylalkohol und Vinylacetat auch Terpolymere aus hydrolysierten Vinylacetat/EthylenCopolymeren eingesetzt werden. Diese Verbindungen sind in der Regel zu mehr als 98% hydrolysiert und enthalten 1 bis 10 Gew. auf Ethylen basierende Einheiten (z.B. Typ _{ʺ}Exceval" der Kuraray Europe GmbH).

Als Polyvinylalkohol können im Rahmen der vorliegenden Erfindung weiterhin auch hydrolysierte Copolymere aus Vinylacetat und mindestens einem weiteren ethylenisch ungesättigten Monomer eingesetzt werden.

Es ist möglich, die Acetalisierung mit Aldehyden mit 2-10 Kohlenstoffatomen, bevorzugt mit Acetaldehyd, Butyraldehyd oder Valeraldehyd durchzuführen.

In einer weiteren, zweiten Variante der Erfindung weisen die erfindungsgemäß verwendeten Polyvinylacetale durch Vernetzung über Carboxylgruppen, durch Polyaldehyde, Glutardialdehyd oder Glyoxylsäure ein erhöhtes Molekulargewicht und eine erhöhte Lösungsviskosität auf.

Vernetzte Polyvinylacetale sind z.B. über eine intramolekulare Vernetzung von Carboxylgruppen-substituierten Polyvinylacetalen erhältlich. Diese können z.B. durch die Coacetalisierung von Polyvinylalkoholen mit Polyaldehyden, Glutardialdehyd oder Glyoxylsäure hergestellt werden. Besonders bevorzugt weisen so die erhaltenen Polyvinylacetale die bereits beschriebenen Untergrenzen für Molekulargewicht Mw bzw. Lösungsviskosität auf. Bevorzugt reagieren durch die Vernetzung 0.001 bis 1 % der ursprünglich im Polyvinylacetal enthaltenen OH-Gruppen ab. Die vernetzten Polyvinylacetale sollen ein ähnliche Löslichkeitsverhalten wie die unvernetzten Polyvinylacetale aufweisen.

Geeignete Vernetzungsmöglichkeiten für Polyvinylacetale sind sind z.B. in EP 1527107 B1 und WO 2004/063231 A1 (thermische Selbstvernetzung von Carboxylgruppenhaltigen Polyvinylacetalen), EP 1606325 A1 (mit Polyaldehyden vernetzte Polyvinylacetale), EP 1622946 A1 (mit Glutardialdehyd vernetzte Polyvinylacetale) und WO 03/020776 A1 (mit Glyoxylsäure vernetzte Polyvinylacetale) beschrieben. Auf die Offenbarung dieser Patentanmeldungen wird vollumfänglich Bezug genommen. Die Vernetzung des Polyvinylacetals wird makroskopisch über ein erhöhtes Molekulargewicht sowie eine erhöhte Viskosität einer ethanolischen Lösung wahrgenommen.

In einer dritten Variante der Erfindung werden die Eigenschaften der erfindungsgemäß verwendeten Polyvinylacetale durch die Acetalisierungsbedingungen bei deren Herstellung eingestellt. Bei der Herstellung von Polyvinylacetalen wird üblicherweise ein Gemisch von Polyvinylalkohol und Aldehyd oder Polyvinylalkohol und einer Säure wie z.B. HCl vorgelegt und durch Zugabe einer Säure bzw. Aldehyd bei einer Temperatur von 0 bis 20°C unter Ausfallen des Polyvinylacetals umgesetzt (Fällphase). Die Fällphase beginnt mit der Zugabe der letzten Komponente (Säure oder Aldehyd) und dauert in der Regel zwischen 60 und 360 Minuten, bevorzugt zwischen 60 und 240 Minuten. Die Fällphase endet mit Beginn des Heizens auf die Endtemperatur.

Der Beginn des Heizens ist der Start der Heizphase. Anschließend wird die Reaktion bei einer Endtemperatur von 30 bis 80 °C vervollständigt, wonach die Reaktionsmischung abgekühlt und das Polyvinylacetal abgetrennt u. aufgearbeitet wird. Die Heizphase endet mit Beginn des Abkühlens und dauert in der Regel zwischen 30 und 300 Minuten.

Besonders geeignet für die erfindungsgemäßen Verbundglaslaminate sind Polyvinylacetale, hergestellt mit Verfahren mit den Schritten
- Vorlage einer wässrigen Lösung von Polyvinylalkohol und mindestens einem Aldehyd
- Zugabe von einer Säure unter Ausfallen des Polyvinylacetals bei niedriger Temperatur (Fällphase), wobei die Fällphase zwischen 60 und 360 min, bevorzugt zwischen 60 und 240 min andauert

Alternativ kann die Fällphase auch wie folgt durchgeführt werden:
- Vorlage einer Wässrigen Lösung von Polyvinylalkohol und Säure
- Zugabe von mindestens einem Aldehyd unter Ausfallen des Polyvinylacetals bei niedriger Temperatur (Fällphase), wobei die Fällphase zwischen 60 und 360 min, bevorzugt zwischen 60 und 240 min andauert.

Die Zugabe von Säure und Aldehyd kann bei beiden Varianten auf einmal oder in Teilmengen erfolgen.

In beiden Varianten wird danach der folgende Verfahrensschritt durchgeführt (Heizphase):
- Aufheizen des Reaktionsgemisches auf eine erhöhte Temperatur
- Nachheizen bei einer erhöhten Temperatur, wobei die gesamte Heizphase zwischen 30 und 300 min andauert.

Für die vorliegende Erfindung geeignete Polyvinylacetale werden mit einer gegenüber der Heizphase deutlich zeitlich längeren Fällphase wie z.B. in DE 2838025, US 5187217, EP 1384731, WO 2004/005358, EP 0211819 JP 01318009 oder WO 2005 070669 beschrieben, hergestellt. Auf die Offenbarung dieser Patentanmeldungen wird vollumfänglich Bezug genommen. Besonders bevorzugt weisen so die erhaltenen Polyvinylacetale die bereits beschriebenen Untergrenzen für Molekulargewicht Mw bzw. Lösungsviskosität auf.

Für die vorliegende Erfindung besonders geeignete Polyvinylacetale werden in einer vierten Variante der Erfindung durch die Kombination eines Herstellprozesses mit einer langen Fällphase wie in der dritten Variante mit einer Vernetzungsreaktion z.B. durch thermische Selbstvernetzung von Carboxylgruppenhaltigen Polyvinylacetalen, durch Vernetzung des Polyvinylacetals mit Polyaldehyden, Glutardialdehyd oder Glyoxylsäure erhalten. Die Vernetzungsreaktion kann während der Herstellung des Polyvinylacetals (d.h. der Umsetzung von Polyvinylalkohol mit Aldehyd) durch gleichzeitige Zugabe des Aldehyds und des Vernetzungsmittels oder auch in einem separaten Reaktionsschritt wie der Zugabe des Vernetzungsmittels in die Extrusion der weichmacherhaltigen Folie erfolgen. Besonders bevorzugt weisen die so erhaltenen Polyvinylacetale die bereits beschriebenen Untergrenzen für Molekulargewicht Mw bzw. Lösungsviskosität auf.

Unabhängig von der Herstellmethode und von einer Vernetzung weisen die erfindungsgemäß eingesetzten Polyvinylacetale neben den Acetaleinheiten noch aus Vinylacetat und Vinylalkohol resultierende Einheiten auf sowie ggf. weitere Comonomere.

Der Polyvinylacetatanteil der erfindungsgemäß verwendeten Polyvinylacetale liegt bevorzugt unter 14 Gew.%, besonders bevorzugt unter 10 Gew.% bzw. unter 5 Gew.% und insbesondere unter 2 Gew.%.

Aus dem Polyvinylalkoholanteil und dem Restacetatgehalt kann der Acetalisierungsgrad rechnerisch ermittelt werden.

Die erfindungsgemäß eingesetzten Folien weisen bevorzugt auch unter humiden Bedingungen im Randbereich eines VSG Feuchte- bzw. Wassergehalte von maximal 2,3 Gew.-%, maximal 2,0 Gew.%, maximal 1,8 Gew.% und besonders bevorzugt von maximal 1,5 Gew.% auf, wodurch eine verbesserte Resistenz gegenüber Delaminationen und eine verminderte Neigung zur Folieneintrübung resultiert.

Bevorzugt weisen die Folien einen Weichmachergehalt im Bereich 18 bis 32 Gew.-%, bevorzugt im Bereich 20 bis 30 Gew.-%, besonders bevorzugt im Bereich 22 bis 28 Gew.-% und insbesondere im Bereich 24 bis 27 Gew.-% auf. Erfindungsgemäß verwendete Folien können einen oder mehrere Weichmacher enthalten.

Erfindungsgemäß besonders geeignet sind Weichmacher, deren Polarität, ausgedrückt durch die Formel 100 x O/(C+H kleiner/gleich 9.4 ist, wobei O, C und H für die Anzahl der Sauerstoff-, Kohlenstoff- und Wasserstoffatome im jeweiligen Molekül steht. Die nachfolgende Tabelle zeigt erfindungsgemäß einsetzbare Weichmacher und deren Polaritätswerte nach der Formel 100 x O/(C+H).

| Name | Abkürzung | | 100 x O/(C+H) |
|---|---|---|---|
| Di-2-ethylhexylsebacat | | (DOS) | 5,3 |
| 1,2-Cyclohexandicarbonsäurediisononylester | | (DINCH) | 5,4 |
| Di-2-ethylhexyladipat | | (DOA) | 6,3 |
| Di-2-ethylhexylphthalat | | (DOP) | 6,5 |
| Dihexyladipat | | (DHA) | 7,7 |
| Dibutylsebacat | | (DBS) | 7,7 |
| Di-2-butoxyethylsebacat | | (DBES) | 9,4 |
| Triethylenglykol-bis-2-ethylhexanoat | | (3G8) | 9,4 |

Weniger geeignet sind die folgenden Weichmacher

| Name | Abkürzung | | 100 x O/(C+H) |
|---|---|---|---|
| Triethylenglykol-bis-n-heptanoat | | 3G7 | 10,3 |
| Tetraethylenglykol-bis-n-heptanoat | | 4G7 | 10,9 |
| Di-2-butoxyethyladipat | | DBEA | 11,5 |
| Di-2-butoxyethoxyethyladipat | | DBEEA | 12,5 |

Besonders bevorzugt enthalten die erfindungsgemäß verwendeten Folien Cyclohexandicarbonsäureester, insbesondere DINCH als Weichmacher. DINCH kann als alleiniger Weichmacher oder in Kombination mit mindestens einem weiteren apolaren oder polaren, auch als Zusatzweichmacher geeigneten Weichmachern in einem Anteil von 1 bis 40 % eingesetzt werden.

Bevorzugt weisen die Folien einen Gesamtweichmachergehalt d.h. der Anteil aller Weichmacher in der Folie im Bereich von 10 - 40 Gew.%, 14 - 34 Gew.%, 16 - 32 Gew.%, 18 - 30 Gew.%, insbesondere 22 - 28 Gew.% auf.

Im Falle vom Mischungen von Cyclohexandicarbonsäureester-Weichmacher kann dessen Anteil, bezogen auf die Mischung über 10%, über 20%, über 30%, über 40%, über 50%, über 60%, über 70%, über 80%, oder über 90% liegen.

Besonderes bevorzugt enthalten die erfindungsgemäßen Folien ein Weichmachergemisch von Adipatdialkylester wie Di-isononyladipat oder Dinonyladipat mit kernhydrierten Alkylphthahalaten und/oder kernhydrierten Alkylterephthalaten im Masseverhältnis 20:80, - 80:20, besonders bevorzugt 30:70 - 70:30 und insbesondere 40:60 - 60:40 oder 50:50. Besonders bevorzugt werden als Adipatdialkylester Di-isononyladipat oder Dinonyladipat (DINA) und als kernhydrierte Phthalate DINCH in den genannten Masseverhältnissen verwendet.

Unter Verwendung der genannten Weichmacher bzw. Weichmacherkombinationen ist es möglich, Folien mit besonders geringer Weichmacherabgabe herzustellen, was bei der Weiterverarbeitung den Vorteil reduzierter Geruchsbelästigung bzw. Auftrittswahrscheinlichkeit von Weichmacheraerosolen mit sich bringt und im fertigen VSG den Vorteil erhöhter Langlebigkeit bietet.

Bevorzugt beträgt die Weichmacherabgabe der erfindungsgemäß verwendeten Folien (wie im folgenden definiert) weniger als 4 Gew.%, bevorzugt 3 Gew.%, besonders bevorzugt weniger als 2 Gew.% und am meisten bevorzugt weniger als 1 Gew.%, jeweils bezogen auf die Gesamtfolie.

Erfindungsgemäß verwendete Folien weisen eine niedrige Kriechneigung bei erhöhter Temperatur auf. Gleichzeitig ist das Schmelzverhalten aber bei der Verarbeitung zu einem Verbundglaslaminat ausreichend, damit ein blasenfreies und vollständig verklebtes Laminat erhalten wird. Erfindungsgemäße Verbundglaslaminate enthalten daher bevorzugt Folien aus weichmacherhaltigem Polyvinylacetal mit einem Schmelzindex (MFR) nach ISO 1133 bei 100 °C/21,6 kg von kleiner/gleich 340 mg/10min, besonders bevorzugt kleiner/gleich 260 mg/10min. Der Schmelzindex (MFR) nach ISO 1133 bei 100 °C/21,6 kg wird an einer Mischung aus Polyvinylacetal mit 26 Gew.% DINCH als Weichmacher bestimmt.

Das Haftungsvermögen von Polyvinylacetalfolien an Glas wird üblicherweise durch die Zugabe von Haftungsregulatoren wie z. B. die in WO 03/033583 A1 offenbarten Alkali- und/oder Erdalkalisalze von organischen Säuren eingestellt. Als besonders geeignet haben sich Kaliumacetat und/oder Magnesiumacetat herausgestellt. Zudem enthalten Polyvinylacetale aus dem Herstellungsprozess häufig Alkaliund/oder Erdalkalisalze von anorganischen Säuren, wie z.B. Natriumchlorid.

Zur Einstellung gewünschten Haftung zum Glas können die erfindungsgemäßen Folien Alkalimetallionen, alleine oder in Kombination, in einem Mengenbereich von 0 - 300 ppm, bevorzugt 0 - 200 ppm, bevorzugt 0 - 100 ppm, bevorzugt 0 - 50 ppm enthalten. Erdalkalimetall- bzw. Zinkionen können, alleine oder in Kombination, in einer Menge von 0 - 150 ppm, bevorzugt 5 - 100 ppm, bevorzugt 10 - 65 ppm enthalten sein. Ein geringer Gehalt an Alkalimetallionen kann durch entsprechende Waschverfahren des Polyvinylacetals und durch die Verwendung besonders gut wirkender Antihaftmittel wie die dem Fachmann bekannten Magnesium-, Calcium- und/oder Zinksalze organischer Säuren (z.B. Acetate) realisiert werden.

Bevorzugt weisen die erfindungsgemäß eingesetzten Folien eine gewisse Basizität, ausgedrückt als Alkali-Titer auf, der in einem Bereich von 2 - 100, bevorzugt 5 - 70, bevorzugt 5 - 50 liegen sollte. Ein maximaler Alkali-Titer von 100 sollte nicht überschritten werden. Der Alkali-Titer wird, wie im folgenden beschrieben, durch Rücktitration der Folie bestimmt und kann durch Zugabe von basischen Substanzen, wie z.B. Metallsalze von organischen Carbonsäuren mit 1 bis 15 Kohlenstoffatomen, insbesondere Alkali- oder Erdalkalisalze wie Magnesium- oder Kaliumacetat eingestellt werden. Die basische Verbindung wird üblicherweise in einer Konzentration von 0,005 bis 2 Gew.% insbesondere 0,05 bis 1 Gew.%, bezogen auf die gesamte Mischung eingesetzt.

Weiterhin kann die vom Wassergehalt der Folie abhängende Haftung an Glas durch den Zusatz von pyrogener Kieselsäure beeinflusst werden. Bevorzugt enthalten die weichmacherhaltigen, auf Polyvinylacetal basierenden Folien 0.001 bis 15 Gew.-%, bevorzugt 0.5 bis 5 Gew.% pyrogenes SiO₂

Die prinzipielle Herstellung und Zusammensetzung von Folien auf Basis von Polyvinylacetalen ist z. B. in EP 185 863 B1, EP 1 118 258 B1 WO 02/102591 A1, EP 1 118 258 B1 oder EP 387 148 B1 beschrieben.

Die Dicke der auf weichmacherhaltigem Polyvinylacetal basierenden Folien liegt zwischen 0,15 und 2,5 mm.

Zur Laminierung des so erhaltenen Schichtkörpers können die dem Fachmann geläufigen Verfahren mit und ohne vorhergehende Herstellung eines Vorverbundes eingesetzt werden.

So genannte Autoklavenprozesse werden bei einem erhöhten Druck von ca. 10 bis 15 bar und Temperaturen von 130 bis 145 °C über ca. 2 Stunden durchgeführt. Vakuumsack- oder Vakuumringverfahren z.B. gemäß EP 1 235 683 B1 arbeiten bei ca. 200 mbar und 130 bis 145 °C

Vorzugsweise werden zur Herstellung der erfindungsgemäßen Verbundglaslaminate Vakuumlaminatoren eingesetzt. Diese bestehen aus einer beheizbaren und evakuierbaren Kammer, in denen Verbundverglasungen innerhalb von 30 - 60 Minuten laminiert werden können. Verminderte Drücke von 0,01 bis 300 mbar und Temperaturen von 100 bis 200 °C, insbesondere 130 - 160 °C haben sich in der Praxis bewährt.

Alternativ kann ein so oben beschrieben zusammengelegter Schichtkörper zwischen mindestens einem Walzenpaar bei einer Temperatur von 60 bis 150 °C zu einem erfindungsgemäßen Verbundsicherheitglas verpresst werden. Anlagen dieser Art sind zur Herstellung von Solarmodulen bekannt und verfügen normalerweise über mindestens einen Heiztunnel vor bzw. nach dem ersten Presswerk bei Anlagen mit zwei Presswerken.

Erfindungsgemäße Verbundglaslaminate können als Fassadenbauteil, Dachflächen, Wintergartenabdeckung, Schallschutzwand, Balkon- oder Brüstungselement, als Bestandteil von Fensterflächen oder als Fahrzeugverglasung verwendet werden.

### Messmethoden:

Die Bestimmung der Glasübergangstemperatur der Folie erfolgt mittels Dynamischer Differenzkalorimetrie (DSC) gemäß DIN 53765 unter Verwendung einer Heizrate von 10K/min im Temperaturintervall -50 °C - 150°C. Es wird eine erste Heizrampe, gefolgt von einer Kühlrampe, gefolgt von einer zweiten Heizrampe gefahren. Die Lage der Glasübergangstemperatur wird an der der zweiten Heizrampe zugehörigen Messkurve nach DIN 51007 ermittelt. Der DIN-Mittelpunkt (Tg DIN) ist definiert als Schnittpunkt einer Horizontalen auf halber Stufenhöhe mit der Messkurve. Die Stufenhöhe ist durch den vertikalen Abstand der beiden Schnittpunkte der Mitteltangente mit den Basislinien der Messkurve vor und nach Glasumwandlung definiert.

Die Bestimmung des Fließverhaltens der Folie erfolgt als Schmelzindex (Massenfluss: MFR) nach ISO 1133 auf einem entsprechenden Gerät, z.B. der Firma Göttfert, Modell MI2. Der MFR-Wert wird bei den entsprechenden Temperaturen von z.B. 100 °C und 140°C mit der 2 mm Düse bei Gewichtsbelastung von 21,6 kg in Gramm pro 10 Minuten (g/10 min) angegeben.

Der Polyvinylalkohol- und Polyvinylalkoholacetatgehalt der Polyvinylacetale wurde gemäß ASTM D 1396-92 bestimmt.

Die Analyse des Metallionengehaltes erfolgte durch Atomabsorptionsspekroskopie (AAS).

Das Molekulargewicht Mw (= Gewichtsmittel) der Polyvinylacetale wurde mittels Gelpermeationschromatographie (GPC) in Eisessig unter Verwendung von RI-Detektoren bestimmt. Die Kalibrierung der Detektoren erfolgte mittels PVB-Eichstandards, deren Absolutwerte mittels statischer Lichtstreuung ermittelt wurden.

Die Messung der Lösungsviskosität der Polyvinylacetale erfolgte gemäß DIN 53015 bei 20°C in einem Gemisch aus 95 Teilen Ethanol u. 5 Teilen Wasser. Der Feststoffgehalt der Viskositätslösung betrug 5 Gew.%.

Die Messung der Lösungsviskosität der Polyvinylalkohole erfolgte gemäß DIN 53015 bei 20°C in Wasser. Der Feststoffgehalt der Viskositätslösung betrug 4 Gew.%.

Der Wasser- bzw. Feuchtegehalt der Folien wird mit der Karl-Fischer-Methode in Gew.%. Zur Simulation des Auffeuchteverhaltens unter humiden Bedingungen wird die Folie zuvor 24h bei 23 °C und 85% rF gelagert. Die Methode kann sowohl an der unlaminierten Folie als auch an einem laminierten Verbundglas in Abhängigkeit vom Abstand zum Rand der Folie durchgeführt werden.

Die Weichmacherabgabe aus der PVB-Folie wird experimentell unter Bedingungen ermittelt, welche an eine Prozessführung im

Vakuumlaminator, wie er zur Herstellung von VSG verwendet wird, angelehnt sind. Hierzu wird aus einer 0.76 mm dicken Folie / Muster eine Ronde in mit einem Durchmesser von 60 mm ausgeschnitten bzw. hergestellt und flach auf den Boden in eine tarierte Aluschale mit einem Durchmesser von 65 mm (neoLab-Aluschale, glatt, 65 mm, Art.-Nr. 2-1605, Gewicht ca. 2,5 g) eingelegt. Die Probe wird in der Schale über Nacht in einem Klima von 23 °C / 25% rF konditioniert und anschließend während 30 Minuten bei 150 °C und 1 mbar in einen Vakuumtrockenschrank (Heraeus, Modell VTR 5022) belassen. Vor dem Zurückwiegen wird die Schale erneut über Nacht bei 23 °C / 25% rF konditioniert. Die festgestellte Gewichtsabnahme bezogen auf die Originaleinwaage der Folie in Prozent wird als Weichmacherabgabe definiert.

### Test auf Kriechneigung

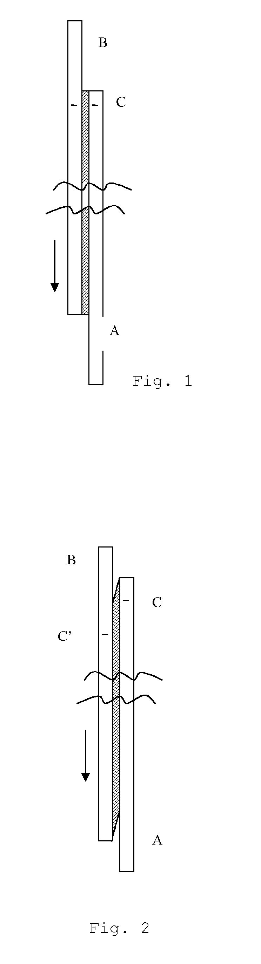

Die Kriechneigung der Folien wird an Testlaminaten bestimmt, welche aus zwei Stücken Floatglas der Dicke 3 mm und Kantenabmessung 150 x 300 mm mit der in Dicke 0.76 mm dazwischen laminierten Folie so hergestellt werden, dass die beiden Gläser in der Länge einen Versatz von 2 cm zueinander aufweisen (A/B in Fig. 1 und 2). Die auf ihre Kriechneigung zu untersuchende Folie wird vor dem Herstellen des Laminates in einem Klima von 23 °C / 23 % rF über Nacht konditioniert.

Die beiden überstehenden Glasabschnitte sind nicht mit Folie bedeckt, d.h. die einlaminierte Zwischenschicht hat lediglich eine Länge von 28 cm. Die Testlaminate werden mit einem Stift von beiden Seiten genau gegenüberliegend mit Querstrichen markiert, anhand derer später der durch Abrutschen resultierende Versatz leicht ausgemessen werden kann. (C in Fig.1) Die Testlaminate werden in einem Heizschrank bei 100 °C in der Vertikalen so aufgestellt bzw. befestigt, dass das vordere, nicht bodenberührende Glas (B in Fig. 1 und 2) unter seinem Eigengewicht frei abgleiten kann, dass heißt, nur durch die Zwischenschichtfolie gehalten wird und auch nur zu dieser Kontakt hat, so dass das Ergebnis nicht durch Reibungseffekte verfälscht wird. Die Testlaminate werden nach Ablauf von 7 Tagen (einer Woche) auf etwaigen Versatz hin untersucht indem der Abstand zwischen den beiden Markierungen mit einem Lineal ausgemessen wird. (C und C' in Fig. 2)

### Beispiele

Es wurden Folien der Dicke 0,76 mm mit den Mischungen der in den nachfolgenden Tabellen aufgeführten Zusammensetzungen hergestellt und als Laminat zwischen 2 Scheiben Planilux der Stärke 3 mm auf ihre Eignung zur Herstellung von Verbundglaslaminaten bezüglich ihrer Kriechneigung untersucht.

Es zeigt sich, dass die erfindungsgemäß verwendeten Folien gut zu Verbundglaslaminaten verarbeitet werden können durch niedrige Kriechwerte (= Abgleiten) bei 100 °C eine geringe Fliessfähigkeit bei dieser Temperatur besitzen, sodass ein gegenüber Umwelt- und mechanischen Einflüssen stabiles Verbundglaslaminat erhalten wird

Folien mit den beschriebenen Fließfähigkeiten sind zur Herstellung von Verbundglaslaminaten mit dicken (mindestens 3 mm) Einzelglasscheiben besonders geeignet, da sie kein Abgleiten der Glasscheiben gegenüber der Klebefolie zeigen, sich aber dennoch gut verarbeiten lassen.

Es bedeuten
- DINCH: 1,2-Cyclohexandicarbonsäurediisononylester
- 3G8: Triethylenglykol-bis-2-ethylhexanoat
- PVB: Polyvinylbutyral mit dem angegebenen PVA-Gehalt

### Vergleichsbeispiel 1:

100 Gewichtsteile des Polyvinylalkohols Mowiol 28-99 (Handelsprodukt von Kuraray Europe GmbH) wurden in 1075 Gewichtsteilen Wasser unter Erwärmen auf 90 °C gelöst. Es wurden bei einer Temperatur von 40 °C 56,8 Gewichtsteile n-Butyraldehyd und bei einer Temperatur von 12 °C unter Rühren innerhalb 6 min 75 Gewichtsteile 20 %ige Salzsäure zugegeben, wonach das Polyvinylbutyral (PVB) ausfiel. Die Mischung wurde danach unter Rühren noch 15 min bei 12 °C gehalten, danach innerhalb 80 min auf 69°C erwärmt und bei dieser Temperatur für 120 min gehalten. Das PVB wurde nach Abkühlen auf Raumtemperatur abgetrennt, mit Wasser neutral gewaschen und getrocknet. Es wurde ein PVB mit einem Polyvinylalkoholgehalt von 20,2 Gew.% und einem Polyvinylacetatgehalt von 1,5 Gew.% erhalten.

290 g des so erhaltenen PVB und 100 g Weichmacher 3G8 und 10 g Weichmacher DBEA wurden in einem Labormischer (Hersteller: Brabender, Modell 826801) gemischt. Die erhaltene Mischung wurde zu Flachfolie mit einer Dicke von 0,8 mm extrudiert. Die Extrusion erfolgte auf einem Doppelschneckenextruder mit gegenlaufenden Schnecken (Hersteller: Haake, System Rhecord 90), ausgerüstet mit Schmelzepumpe und Breitschlitzdüse. Die Zylindertemperatur des Extruders betrug 220 °C, die Düsentemperatur betrug 150°C.

### Vergleichsbeispiel 2:

Bei der Polymersynthese wurden 63,9 Gewichtsteile n-Butyraldehyd eingesetzt. Bei der Folienherstellung wurden 370 g PVB und 130 g Weichmacher DINCH eingesetzt. Das weitere Vorgehen war gemäß Vergleichsbeispiel 1.

### Vergleichsbeispiele 3 - 4:

Bei der Polymersynthese wurden 66,3 und 68,4 Gewichtsteile n-Butyraldehyd eingesetzt. Das weitere Vorgehen war gemäß Vergleichsbeispiel 2.

### Beispiele 1,2 u. 3:

Bei der Polymersynthese wurden 100 Gewichtsteile des Polyvinylalkohols Mowiol 56-98, (Handelsprodukt von Kuraray Europe GmbH), 1333 Gewichtsteile Wasser und 67,9, 68,4 und 69 Gewichtsteile n-Butyraldehyd eingesetzt. Das weitere Vorgehen war gemäß Vergleichsbeispiel 2.

### Beispiele 4 u. 5:

Bei der Polymersynthese wurden 100 Gewichtsteile des Polyvinylalkohols Kuraray Poval 624 (Handelsprodukt von Kuraray Co. Ltd.), 1333 Gewichtsteile Wasser, 100 Gewichtsteile 20 %ige Salzsäure und 70 bzw. 73 Gewichtsteile n-Butyraldehyd eingesetzt. Das weitere Vorgehen war gemäß Vergleichsbeispiel 2.

### Vergleichsbeispiel 5:

Bei der Folienherstellung wurde eine Mischung von 333 g PVB aus Vergleichsbeispiel 4 und 37 g PVB aus Beispiel 2 eingesetzt. Das weitere Vorgehen war gemäß Vergleichsbeispiel 2.

### Beispiel 6:

Bei der Folienherstellung wurde eine Mischung von 259 g PVB aus Vergleichsbeispiel 4 und 111 g PVB aus Beispiel 2 eingesetzt. Das weitere Vorgehen war gemäß Vergleichsbeispiel 2.

### Beispiel 7:

Bei der Folienherstellung wurde eine Mischung von 185 g PVB aus Vergleichsbeispiel 4 und 185 g PVB aus Beispiel 2 eingesetzt. Das weitere Vorgehen war gemäß Vergleichsbeispiel 2.

### Beispiel 8:

Bei der Folienherstellung wurde eine Mischung von 185 g PVB aus Vergleichsbeispiel 4 und 185 g PVB aus Beispiel 3 eingesetzt. Das weitere Vorgehen war gemäß Vergleichsbeispiel 2.

### Beispiele 9 - 12:

Bei der Polymersynthese wurden 68,4 Gewichtsteile n-Butyraldehyd sowie zusätzlich 0,02, 0,04, 0,06 und 0,08 Gewichtsteile Glutaraldehyd eingesetzt. Das weitere Vorgehen war gemäß Vergleichsbeispiel 2.

### Beispiele 13 - 14:

Bei der Polymersynthese wurden 100 Gewichtsteile des Polyvinylalkohols Mowiol 30-92, (Handelsprodukt von Kuraray Europe GmbH), 1075 Gewichtsteile Wasser, 67,1 Gewichtsteile n-Butyraldehyd, 100 Gewichtsteile 20 %ige Salzsäure und 0,04 bzw. 0,08 Gewichtsteile Glutaraldehyd eingesetzt. Das weitere Vorgehen war gemäß Vergleichsbeispiel 2.

### Beispiel 15:

100 Gewichtsteile des Polyvinylalkohols Mowiol 28-99 (Handelsprodukt von Kuraray Europe GmbH) wurden in 1075 Gewichtsteilen Wasser unter Erwärmen auf 90 °C gelöst. Es wurden bei einer Temperatur von 40 °C 68,4 Gewichtsteile n-Butyraldehyd und bei einer Temperatur von 12 °C unter Rühren innerhalb 15 min 15 Gewichtsteile 20 %ige Salzsäure zugegeben, wonach das Polyvinylbutyral (PVB) ausfiel. Die Mischung wurde danach unter Rühren 60 min bei 12 °C gehalten. Danach wurden innerhalb von 40 min weitere 50 Gewichtsteile 20 %ige Salzsäure zugegeben. Die Mischung wurde danach unter Rühren noch 15 min bei 12 °C gehalten, danach innerhalb 80 min auf 69°C erwärmt und bei dieser Temperatur für 120 min gehalten. Das weitere Vorgehen war gemäß Vergleichsbeispiel 2.

### Beispiele 16 - 17:

Die Pause nach Zugabe der ersten Teilmenge der Säure betrug 120 bzw. 180 min. Das weitere Vorgehen war gemäß Beispiel 15.

### Beispiel 18:

100 Gewichtsteile des Polyvinylalkohols Mowiol 28-99 (Handelsprodukt von Kuraray Europe GmbH) wurden in 1075 Gewichtsteilen Wasser unter Erwärmen auf 90 °C gelöst. Es wurden bei einer Temperatur von 40 °C 68,4 Gewichtsteile n-Butyraldehyd und 0,03 Gewichtsteile Glutaraldehyd zugegeben. Bei einer Temperatur von 12 °C wurden unter Rühren innerhalb 6 min 75 Gewichtsteile 20 %ige Salzsäure zugegeben, wonach das Polyvinylbutyral (PVB) ausfiel. Die Mischung wurde danach unter Rühren noch 120 min bei 12 °C gehalten, danach innerhalb 80 min auf 69°C erwärmt und bei dieser Temperatur für 120 min gehalten. Das weitere Vorgehen war gemäß Vergleichsbeispiel 2.

### Beispiel 19:

100 Gewichtsteile des Polyvinylalkohols Mowiol 28-99 (Handelsprodukt von Kuraray Europe GmbH) wurden in 1075 Gewichtsteilen Wasser unter Erwärmen auf 90 °C gelöst. Es wurden bei einer Temperatur von 40 °C 68,4 Gewichtsteile n-Butyraldehyd und 0,03 Gewichtsteile Glutaraldehyd zugegeben. Bei einer Temperatur von 12 °C wurden unter Rühren innerhalb 15 min 15 Gewichtsteile 20 %ige Salzsäure zugegeben, wonach das Polyvinylbutyral (PVB) ausfiel. Die Mischung wurde danach unter Rühren 120 min bei 12 °C gehalten. Danach wurden innerhalb von 40 min 50 Gewichtsteile 20 %ige Salzsäure zugegeben. Die Mischung wurde danach unter Rühren noch 15 min bei 12 °C gehalten, danach innerhalb 80 min auf 69°C erwärmt und bei dieser Temperatur für 120 min gehalten. Das weitere Vorgehen war gemäß Vergleichsbeispiel 2.

### Beispiele 20 - 21:

100 Gewichtsteile des Polyvinylalkohols Mowiol 30-92 (Handelsprodukt von Kuraray Europe GmbH) wurden in 1075 Gewichtsteilen Wasser unter Erwärmen auf 90 °C gelöst. Es wurden bei einer Temperatur von 40 °C 67,1 Gewichtsteile n-Butyraldehyd und 0,06 Gewichtsteile Glutaraldehyd zugegeben. Bei einer Temperatur von 12 °C wurden unter Rühren innerhalb 6 min 100 Gewichtsteile 20 %ige Salzsäure zugegeben, wonach das Polyvinylbutyral (PVB) ausfiel. Die Mischung wurde danach unter Rühren noch 60 bzw. 120 min bei 12 °C gehalten, danach innerhalb 80 min auf 69°C erwärmt und bei dieser Temperatur für 120 min gehalten. Das weitere Vorgehen war gemäß Vergleichsbeispiel 2.

**Tabelle 1**

| Beispiel | VG 1 | VG 2 | VG 3 | VG 4 | VG 5 |
|---|---|---|---|---|---|
| PVB | | | | | |
| Viskosität PVA 4% (mPa.s) | 27,06 | 27,06 | 27,06 | 27,06 | - |
| Fällphase [min] | 21 | 21 | 21 | 21 | - |
| Heizphase [min] | 200 | 200 | 200 | 200 | - |
| Polyvinylalkoholgehalt [w%] | 20,2 | 16,0 | 15, 0 | 14,3 | 14,4 |
| Polyvinylacetatgehalt [w%] | 1,5 | 0,9 | 1, 1 | 0,9 | 1,0 |
| Butyral Gehalt [w%] | 78,3 | 83,1 | 83,9 | 84,8 | 84,6 |
| Polyvinylalkoholgehalt [mol%] | 29, 1 | 23,5 | 22,2 | 21,2 | 21,4 |
| Polyvinylacetatgehalt [mol%] | 1,1 | 0,7 | 0,8 | 0,7 | 0,8 |
| Butyral Gehalt [mol%] | 69,8 | 75,8 | 77,0 | 78,1 | 77,9 |
| Viskosität PVB 5 % (mPa.s) | 81,4 | 68,2 | 70 | 72,9 | 90,1 |
| | | | | | |
| Film | | | | | |
| Weichmacher | 3G8/DBEA (10:1) | DINCH | DINCH | DINCH | DINCH |
| Weichmacher [w%] | 27,5 | 26,0 | 26,0 | 26,0 | 26,0 |
| Tg, Midpoint DIN [°C] | 18, 8 | 24,99 | 23,47 | 21,73 | - |
| Mw, PVB [g/mol] | 103000 | 103800 | 103000 | 101950 | 106000 |
| MFR 100°C/21,6 kg [mg/10min.] | 165 | 397 | 465 | 378 | 351 |
| Wassergehalt nach Karl-Fischer in Gew.% | 3,09 | 1,87 | 1,73 | 1,87 | 1,67 |
| Abgleiten in mm | 0 | 8,5 | 9 | 7 | 5 |

**Tabelle 2**

| Beispiel | B1 | B2 | B3 | B4 | B5 | B6 |
|---|---|---|---|---|---|---|
| PVB | | | | | | |
| Viskosität PVA 4% (mPa.s) | 56,36 | 56,36 | 56,36 | 55,92 | 55,92 | - |
| Fällphase [min] | 21 | 21 | 21 | 21 | 21 | - |
| Heizphase [min] | 200 | 200 | 200 | 200 | 200 | - |
| Polyvinylalkoholgehalt [w%] | 15,6 | 15,0 | 14,1 | 13,5 | 12,7 | 14, 5 |
| Polyvinylacetatgehalt [w%] | 2,0 | 2,1 | 1,9 | 5,4 | 5,7 | 1, 3 |
| Butyral Gehalt [w%] | 82,4 | 83,0 | 84,0 | 81,1 | 81,6 | 84,2 |
| Polyvinylalkoholgehalt [mol%] | 23,0 | 22,2 | 21, 0 | 20,3 | 19,2 | 21,5 |
| Polyvinylacetatgehalt [mol%] | 1,5 | 1,6 | 1,5 | 4,1 | 4,4 | 1,0 |
| Butyral Gehalt [mol%] | 75,5 | 76,2 | 77,6 | 75,6 | 76,4 | 77,5 |
| Viskosität PVB 5 % (mPa.s) | 179, 8 | 177,3 | 177,8 | 195,8 | 205,9 | 105,5 |
| | | | | | | |
| Film | | | | | | |
| Weichmacher | DINCH | DINCH | DINCH | DINCH | DINCH | DINCH |
| Weichmacher [w%] | 26, 0 | 26, 0 | 26 | 26 | 26 | 26, 0 |
| Tg, Midpoint DIN [°C] | 23,81 | 24,16 | - | - | - | - |
| Mw, PVB [g/mol] | 143300 | 144300 | 143775 | 150800 | 150200 | 113500 |
| MFR 100°C/21,6 kg [mg/10min.] | 88 | 83 | 97 | 84 | 97 | 263 |
| Wassergehalt nach Karl-Fischer in Gew.% | 1,79 | 1,76 | 1, 7 | 1, 61 | 1,55 | 1, 69 |
| Abgleiten in mm | 1 | 1 | 0 | 1 | 1 | 2 |

**Tabelle 3**

| Beispiel | B7 | B8 | B9 | B10 | B11 | B12 |
|---|---|---|---|---|---|---|
| PVB | - | - | - | - | - | - |
| Viskosität PVA 4% (mPa.s) | - | - | 26,8 | 27,06 | 27,06 | 27,06 |
| Fällphase [min] | - | - | 21 | 21 | 21 | 21 |
| Heizphase [min] | - | - | 200 | 200 | 200 | 200 |
| Polyvinylalkoholgehalt [w%] | 14,7 | 14,2 | 14,5 | 14,5 | 14,2 | 14,4 |
| Polyvinylacetatgehalt [w%] | 1,5 | 1,4 | 1,2 | 0,9 | 1,0 | 0,9 |
| Butyral Gehalt [w%] | 83,8 | 84,4 | 84,3 | 84, 6 | 84,8 | 84,7 |
| Polyvinylalkoholgehalt [mol%] | 21,8 | 21,1 | 21,5 | 21, 6 | 21,2 | 21,3 |
| Polyvinylacetatgehalt [mol%] | 1,1 | 1,1 | 0,9 | 0,7 | 0,8 | 0,7 |
| Butyral Gehalt [mol%] | 77,1 | 77,8 | 77, 6 | 77,8 | 78,1 | 78,0 |
| Viskosität PVB 5 % (mPa.s) | 120 | 120 | 79,8 | 90, 9 | 103,7 | 120,5 |
| | | | | | | |
| Film | | | | | | |
| Weichmacher | DINCH | DINCH | DINCH | DINCH | DINCH | DINCH |
| Weichmacher [w%] | 26,0 | 26 | 26,0 | 26,0 | 26,0 | 26,0 |
| Tg, Midpoint DIN [°C] | - | - | 23,69 | | | |
| Mw, PVB [g/mol] | 122300 | 122400 | 111450 | 127200 | 141850 | 159600 |
| MFR 100°C/21,6 kg [mg/10min.] | 172 | 180 | 340 | 227 | 189 | 105 |
| Wassergehalt nach Karl-Fischer in Gew.% | 1,69 | 1,64 | 1,62 | 1,63 | 1,72 | 1, 67 |
| Abgleiten in mm | 1 | 0 | 4 | 1 | 1 | 0 |

**Tabelle 4**

| Beispiel | B13 | B14 | B15 | B16 | B17 | B18 |
|---|---|---|---|---|---|---|
| PVB | | | | | | |
| Viskosität PVA 4% (mPa.s) | 30,75 | 30,75 | 27,06 | 27,06 | 27,06 | 27,06 |
| Fällphase [min] | 21 | 21 | 115 | 175 | 235 | 126 |
| Heizphase [min] | 200 | 200 | 200 | 200 | 200 | 200 |
| Polyvinylalkoholgehalt [w%] | 11,1 | 11,3 | 14,5 | 15,1 | 14,8 | 15,0 |
| Polyvinylacetatgehalt [w%] | 9,0 | 8,8 | 1,0 | 0,9 | 0,9 | 1,0 |
| Butyral Gehalt [w%] | 79, 9 | 79, 9 | 84,5 | 84,0 | 84,2 | 84,0 |
| Polyvinylalkoholgehalt [mol%] | 17,0 | 17,3 | 21,5 | 22,3 | 22,0 | 22,2 |
| Polyvinylacetatgehalt [mol%] | 7,1 | 6,9 | 0,7 | 0,7 | 0,7 | 0,8 |
| Butyral Gehalt [mol%] | 75,9 | 75,8 | 77,7 | 77,0 | 77,3 | 77,0 |
| Viskosität PVB 5 % (mPa.s) | 111,6 | 152,1 | 83, 6 | 87,8 | 88,3 | 90,4 |
| | | | | | | |
| Film | | | | | | |
| Weichmacher | DINCH | DINCH | DINCH | DINCH | DINCH | DINCH |
| Weichmacher [w%] | 26 | 26 | 26,0 | 26 | 26 | 26 |
| Tg, Midpoint DIN [°C] | - | - | 22,08 | - | - | - |
| Mw, PVB [g/mol] | 141800 | 172400 | 102525 | 103225 | 102075 | 116700 |
| MFR 100°C/21,6 kg [mg/10min.] | 221 | 103 | 156 | 131 | 116 | 253 |
| Wassergehalt nach Karl-Fischer in Gew.% | 1,52 | 1,54 | 1,64 | 1,68 | 1,7 | 1,78 |
| Abgleiten in mm | 3 | 0 | 1 | 0 | 0 | 2 |

**Tabelle 5**

| Beispiel | B19 | B20 | B21 |
|---|---|---|---|
| PVB | | | |
| Viskosität PVA 4% (mPa.s) | 27,06 | 30,75 | 30,75 |
| Fällphase [min] | 175 | 106 | 166 |
| Heizphase [min] | 200 | 200 | 200 |
| Polyvinylalkoholgehalt [w%] | 14,7 | 11,8 | 11, 6 |
| Polyvinylacetatgehalt [w%] | 1, 1 | 9,2 | 9, 6 |
| Butyral Gehalt [w%] | 84,2 | 79,0 | 78,8 |
| Polyvinylalkoholgehalt [mol%] | 21,8 | 18,0 | 17,8 |
| Polyvinylacetatgehalt [mol%] | 0,8 | 7,2 | 7,5 |
| Butyral Gehalt [mol%] | 77,4 | 74,8 | 74,7 |
| Viskosität PVB 5 % (mPa.s) | 102,6 | 131,6 | 124,2 |
| | | | |
| Film | | | |
| Weichmacher | DINCH | DINCH | DINCH |
| Weichmacher [w%] | 26 | 26 | 26 |
| Tg, Midpoint DIN [°C] | - | - | - |
| Mw, PVB [g/mol] | 115400 | 160500 | 155400 |
| MFR 100°C/21,6 kg [mg/10min.] | 106 | 121 | 181 |
| Wassergehalt nach Karl-Fischer in Gew.% | 1,68 | 1,54 | 1,5 |
| Abgleiten in mm | 0 | 0 | 1 |

## Patentansprüche

1. Verbundglaslaminat, bestehend aus einem Schichtkörper aus mindestens zwei Glasscheiben mit mindestens einer zwischengelegten Folie aus weichmacherhaltigem Polyvinylacetal **dadurch gekennzeichnet, dass** die Folie Polyvinylacetal mit einem Polyvinylalkoholanteil von weniger als 18 Gew.% enthält und eine Kriechneigung, bestimmt an einem Laminat mit dem Aufbau aus 3 mm Floatglas/ / 0,76 mm Folie / 3 mm Floatglas, bei einer Temperatur von 100°C nach 7 Tagen von weniger als 5 mm aufweist.

2. Verbundglaslaminat nach Anspruch 1
**dadurch gekennzeichnet, dass** die Polyvinylacetale ein Molekulargewicht Mw von mehr als 110000 g/mol aufweisen.

3. Verbundglaslaminat nach Anspruch 1 oder 2
**dadurch gekennzeichnet, dass** die Polyvinylacetale eine Lösungsviskosität von mehr als 80 mPas aufweisen.

4. Verbundglaslaminat nach einem der Ansprüche 1 bis 3
**dadurch gekennzeichnet, dass** die Polyvinylacetale über Carboxylgruppen, durch Polyaldehyde, Glutardialdehyd oder Glyoxylsäure vernetzt sind.

5. Verbundglaslaminat nach einem der Ansprüche 1 bis 4 **dadurch gekennzeichnet, dass** die Polyvinylacetale durch ein Verfahren mit den Schritten
- Vorlage einer Wässrigen Lösung von Polyvinylalkohol und mindestens einem Aldehyd
- Zugabe von einer Säure unter Ausfallen des Polyvinylacetals bei niedriger Temperatur (Fällphase).
- Aufheizen des Reaktionsgemisches auf eine erhöhte Temperatur (Heizphase) hergestellt werden, wobei die Fällphase 60 bis 360 min andauert.

6. Verbundglaslaminat nach einem der Ansprüche 1 bis 4 **dadurch gekennzeichnet, dass** die Polyvinylacetale mit einem Verfahren mit den Schritten
- Vorlage einer wässrigen Lösung von Polyvinylalkohol und Säure
- Zugabe von mindestens einem Aldehyd unter Ausfallen des Polyvinylacetals bei niedriger Temperatur (Fällphase)
- Aufheizen des Reaktionsgemisches auf eine erhöhte
Temperatur (Heizphase)
hergestellt werden, wobei die Fällphase 60 bis 360 min andauert.

7. Verbundglaslaminat nach einem der Ansprüche 1 bis 6 **dadurch gekennzeichnet, dass** die Folie aus weichmacherhaltigem Polyvinylacetal einen Schmelzindex (MFR) nach ISO 1133 bei 100 °C/21,6 kg von kleiner/gleich 340 mg/10min aufweist.

8. Verbundglaslaminat nach einem der Ansprüche 1 bis 7 **dadurch gekennzeichnet, dass** die weichmacherhaltigen, auf Polyvinylacetal basierenden Folien einen Weichmachergehalt von 18 bis 32 Gew.-% aufweisen.

9. Verbundglaslaminat nach einem der Ansprüche 1 bis 8 **dadurch gekennzeichnet, dass** als Weichmacher eine oder mehrere Verbindungen eingesetzt werden, deren Polarität, ausgedrückt durch die Formel 100 x O/(C+H) kleiner/gleich 9.4 ist, wobei O, C und H für die Anzahl der Sauerstoff-, Kohlenstoff- und Wasserstoffatome im jeweiligen Molekül steht.

10. Verbundglaslaminat nach einem der Ansprüche 1 bis 9 **dadurch gekennzeichnet, dass** als Weichmacher eine oder mehrere Verbindungen aus der Gruppe Di-2-ethylhexylsebacat, Di-2-ethylhexyladipat, Dihexyladipat, Dibutylsebacat, Di-2-butoxyethylsebacat, Triethylenglykol-bis-2-ethylhexanoat, Di-isononyladipat, Dinonyladipat und 1,2-Cyclohexandicarbonsäurediisononylester eingesetzt wird.

11. Verbundglaslaminat nach einem der Ansprüche 1 bis 10 **dadurch gekennzeichnet, dass** die weichmacherhaltige, auf Polyvinylacetal basierende Folie 0.001 bis 5 Gew.-% SiO₂ enthält.

12. Verbundglaslaminat nach einem der Ansprüche 1 bis 11 **dadurch gekennzeichnet, dass** mindestens eine der Glasscheiben des Schichtkörpers eine Dicke von mindestens 3mm aufweist

13. Verbundglaslaminat nach einem der Ansprüche 1 bis 12 **dadurch gekennzeichnet, dass** als Polyvinylacetal Polyvinylbutyral eingesetzt wird
